# EUROPÄISCHE PATENTSCHRIFT

(11) **EP 2 932 551 B1**
(45) Veröffentlichungstag und Bekanntmachung des Hinweises auf die Patenterteilung: **29.08.2018**
(21) Anmeldenummer: 13792687.9
(22) Anmeldetag: 20.11.2013
(51) Int. Cl.: H01M 10/04

(54) **PRODUKTIONSANLAGE FÜR LITHIUM-IONEN-ZELLEN**
PRODUCTION SYSTEM FOR LITHIUM-ION CELLS
INSTALLATION DE PRODUCTION POUR DES CELLULES LITHIUM-ION

(30) Priorität: 13.12.2012 DE 102012223092
(43) Veröffentlichungstag der Anmeldung: 21.10.2015
(73) Patentinhaber: Robert Bosch GmbH, 70442 Stuttgart (DE)
(72) Erfinder: BUKOWSKI, Wilfred, 70499 Stuttgart (DE); PRESCHA, Klaus, 74354 Besigheim (DE)
(86) Internationale Anmeldenummer: PCT/EP2013/074228
(87) Internationale Veröffentlichungsnummer: WO 2014/090527

(56) Entgegenhaltungen:
- US-A1- 2006 277 750

## Beschreibung

### Stand der Technik

Die Erfindung betrifft eine Produktionsanlage für Lithium-Ionen-Zellen nach dem Oberbegriff des Anspruchs 1, wie sie beispielsweise aus der US 2006/277750 A1 bekannt ist.

Bei einer zumindest ähnlichen, aus der Praxis bekannten Produktionsanlage, welche insbesondere zur Produktion von prismatischen Lithium-Ionen-Zellen verwendet wird, umfasst diese eine Reihe von unterschiedlichen Fertigungsstationen. Diese Fertigungsstationen sind erforderlich, um die unterschiedlichen Prozessschritte, die zur Herstellung der Lithium-Ionen-Zellen erforderlich sind, auszuführen. Die Fertigungsstationen dienen beispielsweise zum Befüllen des Elektrolyts, zum Einsaugen von Elektrolyt und zum sogenannten Vorladen. Die einzelnen Fertigungsstationen sind bei den aus dem Stand der Technik bekannten Produktionsanlagen mittels einer als Transferband ausgebildeten Fördereinrichtung miteinander verbunden. Jede Fertigungsstation hat die Aufgabe, ihren kompletten Prozessschritt komplett auszuführen. Es sind jedoch einige Prozessschritte während des Produktionsablaufs mehrfach vorhanden bzw. durchzuführen, beispielsweise sind nach verschiedenen Prozessschritten Lagerzeiten zur Beruhigung der elektrochemischen Reaktion oder zum Homogenisieren des eingesaugten Elektrolyts in die elektrochemisch aktiven Schichten erforderlich. Diese Lagerzeiten sind insbesondere bei unterschiedlichen Baugrößen der Lithium-Ionen-Zellen, die auf ein und derselben Produktionsanlage hergestellt werden sollen, unterschiedlich lang und unterschiedlich oft zu durchlaufen. Durch die Verkettung der einzelnen Fertigungsstationen, die den jeweiligen Prozessschritt komplett durchführen, sind die Fertigungsstationen unflexibel für Ablaufänderungen und die Gesamtkosten der Produktionsanlage durch unnötige Pufferbildung sehr hoch. Auch sind bei mehrfach gleichen Teilprozessen während des Gesamtprozesses (z.B. ist es erforderlich, die Zellen vor dem Befüllen mit Elektrolyt und nach dem vollständigen Befüllen jeweils zu wiegen) einige Einrichtungen innerhalb der Fertigungsstationen (z.B. Waagen) unnötigerweise mehrfach vorhanden, weil sie in unterschiedlichen Teilprozessen und damit in unterschiedlichen Fertigungsstationen angeordnet sind. Weiterhin sind bei der eingangs genannten Schrift die einzelnen Fertigungsstationen derart angeordnet, dass diese mittels der Fördereinrichtung in einer stets gleichen Förderrichtung nacheiander angefahren werden. Die Anordnung der einzelnen Fertigungstationen erfolgt daher in der Reihenfolge der Prozessschritte unmittelbar nacheinander. Eine flexible Anordnung von Fertigungsstationen an beliebigen Orten innerhalb der Produktionsanlage nicht möglich.

### Offenbarung der Erfindung

Ausgehend von dem dargestellten Stand der Technik liegt der Erfindung die Aufgabe zugrunde, eine Produktionsanlage für Lithium-Ionen-Zellen nach dem Oberbegriff des Anspruchs 1 derart weiterzubilden, dass deren Investitionskosten möglichst gering sind und darüber hinaus eine flexible Fertigung unterschiedlichster Lithium-Ionen-Zellen ermöglicht wird. Diese Aufgabe wird erfindungsgemäß bei einer Produktionsanlage für Lithium-Ionen-Zellen mit den Merkmalen des Anspruchs 1 dadurch gelöst, dass die Fertigungsstationen im Bereich eines Lagersystems mit Aufnahmeplätzen für die Fertigungsstationen angeordnet sind, und dass die Fördereinrichtung zum unmittelbaren Transport von Lithium-Ionen-Zellen zwischen zwei beliebigen Fertigungsstationen als Portalfördereinrichtung mit einer Laufschiene und einem heb- und senkbaren Förderorgan ausgebildet ist
Mit anderen Worten gesagt bedeutet dies, dass die aus dem Stand der Technik bekannte starre Anordnung von Fertigungsstationen, die mittels eines Transfer- bzw. Förderbandes miteinander verbunden sind, dadurch aufgehoben wird, dass in Art eines modularen Systems die einzelnen Fertigungsstationen innerhalb eines Lagersystems, das eine Vielzahl von Aufnahmeplätzen aufweist, in mehr oder weniger freier Anordnung angeordnet werden können, wobei die Fördereinrichtung zum unmittelbaren Transport der Lithium-Ionen-Zellen zwischen zwei beliebigen Fertigungsstationen ausgebildet ist und dadurch eine flexible Anordnung der Fertigungsstationen innerhalb der Aufnahmeplätze des Lagersystems erst ermöglicht wird.

Vorteilhafte Weiterbildungen der erfindungsgemäßen Produktionsanlage für Lithium-Ionen-Zellen sind in den Unteransprüchen aufgeführt.

In ganz besonders bevorzugter Ausgestaltung des Lagersystems wird vorgeschlagen, dass das Lagersystem als Hochregallager ausgebildet ist. Derartige Hochregallager haben den Vorteil, dass sie bezüglich der benötigten Grundfläche optimiert sind und darüber hinaus eine enge Anordnung von Teilen bzw. Fertigungsstationen ermöglicht. Weiterhin sind derartige Hochregallager in unterschiedlichsten Anwendungen, Größen usw. aus dem Stand der Technik bekannt, sodass die benötigten Investitionskosten zum Erstellen eines Hochregallagers für eine Produktionsanlage für Lithium-Ionen-Zellen relativ gering sind.

Zur Minimierung der Kosten für das Lagersystem, und um möglichst flexible Anordnungen der Fertigungsstationen innerhalb des Lagersystems zu erzielen, ist es weiterhin in einer vorteilhaften Ausgestaltung der Erfindung vorgesehen, dass die Aufnahmeplätze standardisierte Größen aufweisen. Damit ist gemeint, dass innerhalb des Lagersystems die Aufnahmeplätze beispielsweise lediglich zwei oder drei unterschiedliche, standardisierte Größen aufweisen, die vorzugsweise derart gewählt sind, dass alle denkbaren Fertigungsstationen an möglichst vielen Plätzen innerhalb des Lagersystems angeordnet werden können, wobei das Lagersystem insgesamt jedoch hinsichtlich seines Raumbedarfs minimiert ist.

Gerade bei Lithium-Ionen-Zellen ist es, wie eingangs erwähnt, erforderlich, diese nach einzelnen Fertigungs- bzw. Prozessschritten zu lagern, damit elektrochemische Prozesse vor dem Durchführen eines nächsten Prozessschritts stattfinden können. Daher ist es in einer weiteren Ausgestaltung der Erfindung vorgesehen, dass wenigstens einer der Aufnahmeplätze, vorzugsweise mehrere Aufnahmeplätze, als Lagerplatz ohne Fertigungsstation ausgebildet ist. Dadurch wird der Vorteil erzielt, dass eine Lagerung von Lithium-Ionen-Zellen innerhalb der Fertigungsstationen vermieden wird, so dass die Fertigungsstationen optimal ausgelastet werden können, d.h., dass nach Durchführen eines bestimmen Prozessschrittes innerhalb der Fertigungsstation und dem Abtransport der Lithium-Ionen-Zellen nächste Lithium-Ionen-Zellen der betreffenden Fertigungsstation zugeführt werden können.

Zur Minimierung der Transportwege innerhalb des Lagersystems kann es vorgesehen sein, dass beim Vorhandensein mehrerer als Lagerplatz ausgebildeter Aufnahmeplätze dieser derjenigen Fertigungsstation zugeordnet ist, die als zuletzt erforderliche oder als nächstes erforderliche Fertigungsstation für die Lithium-Ionen-Zellen einen minimalen Abstand zum betreffenden Aufnahmeplatz aufweist. Das bedeutet, dass nach Durchführen eines Prozessschrittes innerhalb einer Fertigungsstation die Lithium-Ionen-Zelle zur Zwischenlagerung aus der Fertigungsstation entnommen und entweder einem Lagerplatz zugeführt wird, der bezogen auf alle Lagerplätze am nächsten zu der Fertigungsstation befindet, oder aber, dass die Lithium-Ionen-Zelle demjenigen Lagerplatz zugeführt wird, der den geringsten Abstand bezüglich der Fertigungsstation aufweist, die der Lithium-Ionen-Zelle als nächstes zugeführt wird.

Um insbesondere ggf. erforderliche Wartungs- und/oder Umrüstarbeiten möglichst einfach durchführen zu können, und darüber hinaus die Statik des Lagersystems möglichst gering zu belasten bzw. einfach ausbilden zu können, ist es in einer weiteren Ausgestaltung der Erfindung vorgesehen, dass die Fertigungsstationen im Bezug auf die vertikale Erstreckung des Hochregallagers in einem bodennahen Bereich des Hochregallagers angeordnet sind. Dadurch wird für Bedienpersonal insbesondere die Möglichkeit geschaffen, dass dieses vom Boden aus Zugriff zu den einzelnen Fertigungsstationen hat.

Um bei einer bestimmten Anzahl von Aufnahmeplätzen für das Hochregallager ein möglichst kompaktes Hochregallager auszubilden, bei dem darüber hinaus die Fördereinrichtung hinsichtlich ihrer Größe minimiert werden kann, ist es in einer bevorzugten Ausgestaltung des Hochregallagers vorgesehen, dass dieses zwei zueinander parallel angeordnete Lagerbereiche mit einem dazwischen angeordneten Zwischenbereich für die Fördereinrichtung aufweist.

In einer nicht von den Schutzansprüchen umfassten Ausgestaltung der Produktionsanlage ist es vorgesehen, dass die in den Fertigungsstationen angeordneten Prozesseinrichtungen über alle Fertigungsstationen gesehen in einer Minimalanzahl, vorzugsweise lediglich einmal, vorhanden sind. Gemeint ist hier Folgendes: Ist es z.B. erforderlich, innerhalb einer einzigen Fertigungsstation eine Lithium-Ionen-Zelle mehrfach zu wiegen (z.B. vor und nach einem Prozessschritt), so kann dies innerhalb der Fertigungsstation entweder mittels einer Wiegeeinrichtung, oder mittels zwei Wiegeeinrichtungen erfolgen. Dies erfolgt anhand grundsätzlicher Überlegungen, z.B. der erforderlichen Genauigkeit der Wiegeeinrichtungen, einer möglichst kurzen Prozesslaufzeit innerhalb einer Fertigungsstation usw.. Ist es nun erforderlich, innerhalb einer anderen Fertigungsstation ebenfalls einen Wiegeprozess durchzuführen, so ist es im Rahmen der Erfindung vorgesehen, dass zum Durchführen dieses Wiegeschrittes die Lithium-Ionen-Zelle beispielsweise aus besagter Fertigungsstation zum Wiegen der Lithium-Ionen-Zelle zu der eingangs erwähnten Fertigungsstation gefördert wird, die entweder eine oder zwei Wiegeeinrichtungen aufweist. Nach dem Wiegen in dieser Fertigungsstation wird die Lithium-Ionen-Zelle wieder in die ursprüngliche Fertigungsstation zurück verbracht bzw. an eine Fertigungsstation, die einen nachfolgenden Prozessschritt durchführt. Es kann auch vorgesehen sein, dass mehrere Fertigungsstationen entsprechende Wiegeeinrichtungen aufweisen, jedoch ist insgesamt nur eine derartige Anzahl vorgesehen, die unter fertigungstechnischen Aspekten und mit Blick auf die Transportleistung der vorhandenen Fördereinrichtung minimal erforderlich ist.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine vereinfachte Draufsicht auf eine erfindungsgemäße Produktionsanlage für Lithium-Ionen-Zellen und
- Fig. 2: eine Seitenansicht auf einen mit einer Vielzahl von Aufnahmeplätzen versehenen Lagerbereich zur Anordnung von Fertigungsstationen und Lagerplätzen, wie er Teil der Produktionsanlage gemäß der Fig. 1 ist.

Gleiche Elemente bzw. Elemente mit gleicher Funktion sind in den Figuren mit den gleichen Bezugsziffern versehen.

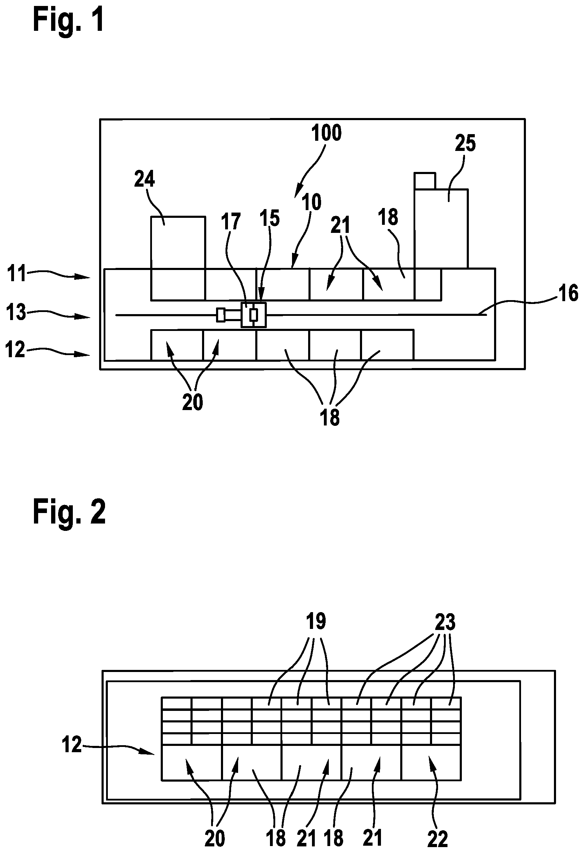

In der Fig. 1 ist eine erfindungsgemäße Produktionsanlage 100 zum Herstellen von in den Figuren nicht gezeigten, an sich bekannten Lithium-Ionen-Zellen, insbesondere von prismatischen Lithium-Ionen-Zellen, dargestellt. Die Produktionsanlage 100 umfasst ein Hochregallager 10 mit zwei, parallel zueinander angeordneten Lagerbereichen 11, 12, und einem zwischen den beiden Lagerbereichen 11, 12 angeordneten Zwischenbereich 13. Innerhalb des Zwischenbereichs 13 ist eine Fördereinrichtung 15 in Form einer Portalförderanlage angeordnet, die beispielhaft eine Laufschiene 16 und ein an der Laufschiene 16 angeordnetes, heb- und senkbares Förderorgan 17 aufweist. Eine derartige Fördereinrichtung 15 ist aus dem Bereich von Fördereinrichtungen für Hochregallager an sich bekannt und wird daher im Folgenden nicht näher beschrieben. Das Förderorgan 17 dient dazu, einzelne Lithium-Ionen-Zellen bzw. vorzugsweise jeweils eine Gruppe von Lithium-Ionen-Zellen innerhalb des Hochregallagers 10 zwischen verschiedenen Stationen zu transportieren, wobei die Lithium-Ionen-Zellen in geeigneten Aufnahmeelementen aufgenommen sind.

Wie aus einer Zusammenschau der Fig. 1 und 2 erkennbar ist, umfasst das Hochregallager 10 in den Lagerbereichen 11, 12 im Ausführungsbeispiel im Wesentlichen zwei unterschiedlich Arten von Aufnahmeplätzen 18, 19 mit jeweils standardisierter Größe. Die einen, größeren Aufnahmeplätze 18 sind im Bodenbereich des Hochregallagers 10 angeordnet und dienen der Aufnahme von Fertigungsstationen 20 bis 22 zum Durchführen unterschiedlicher Fertigungs- bzw. Prozessschritte an den Lithium-Ionen-Zellen. Die eine geringere Größe aufweisenden Aufnahmeplätze 19 sind oberhalb der Aufnahmeplätze 18 angeordnet. Sie dienen im dargestellten Ausführungsbeispiel als Lagerplätze 23, um Lithium-Ionen-Zellen, insbesondere zwischen einzelnen Prozessschritten, zwischenzulagern, damit beispielsweise elektrochemische Prozesse stattfinden bzw. abgeschlossen sind, bevor die Lithium-Ionen-Zellen einer nachfolgenden Fertigungsstation 20 bis 22 zugeführt werden. In der Fig. 1 erkennt man darüber hinaus einen Bestückungsbereich 24, der auf der dem Zwischenbereich 13 abgewandten Seite des einen Lagerbereichs 11 angeordnet ist. In dem Bestückungsbereich 24 werden angelieferte Teile der Lithium-Ionen-Zellen beispielsweise auf entsprechende Träger bzw. Aufnahmen zum Transport der Lithium-Ionen-Zellen innerhalb des Hochregallagers 10 angeordnet. Auf derselben Seite wie der Bestückungsbereich 24 des Lagerbereichs 11 ist darüber hinaus ein Umsetz-, Reinigungs- und Verschließ- sowie Übergabebereich 25 angeordnet, über den die Lithium-Ionen-Zellen, nachdem sie die Fertigungsstation 20 bis 22 durchlaufen haben, aus dem Hochregallager 10 ausgeschleust werden.

Beispielhaft sind die beiden Fertigungsstationen 20 als Stationen zum Befüllen der Lithium-Ionen-Zellen mit einem Elektrolyt ausgebildet. Die insgesamt sechs Fertigungsstationen 21 sind als sogenannte Vorladeeinrichtungen ausgebildet, und die Fertigungsstation 22 dient dem Absaugen von Gasen.

Beim Fertigen der Lithium-Ionen-Zellen durchlaufen diese die einzelnen Fertigungsstationen 20 bis 22, wobei der Transport zwischen den Fertigungsstationen 20 bis 22 durch die Fördereinrichtung 15 erfolgt. Zur ggf. erforderlichen Zwischenlagerung der Lithium-Ionen-Zellen zwischen den einzelnen Fertigungsstationen 20 bis 22 werden die Lithium-Ionen-Zellen auf den Lagerplätzen 23 zwischengelagert. Nach Durchlaufen aller Fertigungsstationen 20 bis 22 und einer ggf. danach noch erforderlichen Verweilzeit werden die gefertigten Lithium-Ionen-Zellen über den Bereich 25 aus dem Hochregallager 10 bzw. Produktionsanlage 100 ausgeschleust.

Die soweit beschriebene Produktionsanlage 100 kann in vielfältiger Art und Weise abgewandelt bzw. modifiziert werden, ohne vom Erfindungsgedanken abzuweichen. So ist es beispielsweise denkbar, das Lagersystem nicht in Art eines Hochregallagers 10 auszubilden, sondern in Form von mehreren, parallel zueinander angeordneten, relativ niedrig bauenden Lagerbereichen, die über die Fördereinrichtung 15 miteinander verbunden sind. In diesem Fall ist es besonders vorteilhaft, die Fördereinrichtung 13 als Portalförderanlage auszubilden, die die entsprechenden Lagerbereiche überbrückt.

## Patentansprüche

1. Produktionsanlage (100) für Lithium-Ionen-Zellen, mit mehreren Fertigungsstationen (20 bis 22) zum Durchführen unterschiedlicher Prozessschritte an den Lithium-Ionen-Zellen, wobei die Fertigungsstationen (20 bis 22) zum Transport der Lithium-Ionen-Zellen zwischen den Fertigungsstationen (20 bis 22) mittels einer Fördereinrichtung (15) miteinander verbunden sind,
**dadurch gekennzeichnet,**
**dass** die Fertigungsstationen (20 bis 22) im Bereich eines Lagersystems mit Aufnahmeplätzen (18) für die Fertigungsstationen (20 bis 22) angeordnet sind, und dass die Fördereinrichtung (15) zum unmittelbaren Transport von Lithium-Ionen-Zellen zwischen zwei beliebigen Fertigungsstationen (20 bis 22) als Portalfördereinrichtung mit einer Laufschiene (16) und einem heb- und senkbaren Förderorgan (17) ausgebildet ist.

2. Produktionsanlage nach Anspruch 1,
**dadurch gekennzeichnet,**
**dass** das Lagersystem als Hochregallager (10) ausgebildet ist.

3. Produktionsanlage nach Anspruch 2,
**dadurch gekennzeichnet,**
**dass** wenigstens ein weiterer Aufnahmeplatz (19), vorzugsweise mehrere weitere Aufnahmeplätze (19) vorgesehen sind, wobei der wenigstens eine weitere Aufnahmeplatz (19) als Lagerplatz (23) ohne Fertigungsstation (20 bis 22) ausgebildet ist, und dass der wenigstens eine Lagerplatz (23) oberhalb der Fertigungsstation (20 bis 22) angeordnet ist.

4. Produktionsanlage nach Anspruch 3,
**dadurch gekennzeichnet,**
**dass** beim Vorhandensein mehrerer als Lagerplatz (23) ausgebildeter Aufnahmeplätze (19) dieser derjenigen Fertigungsstation (20 bis 22) zugeordnet ist, die als zuletzt erforderliche oder als nächstes erforderliche Fertigungsstation (20 bis 22) für die Lithium-Ionen-Zellen einen minimalen Abstand zum betreffenden Aufnahmeplatz (23) aufweist.

5. Produktionsanlage nach einem der Ansprüche 1 bis 4,
**dadurch gekennzeichnet,**
**dass** die Aufnahmeplätze (18, 19) standardisierte Größen aufweisen.

6. Produktionsanlage nach einem der Ansprüche 2 bis 5,
**dadurch gekennzeichnet,**
**dass** die Fertigungsstationen (20 bis 22) in Bezug auf die vertikale Erstreckung des Hochregallagers (10) in einem bodennahen Bereich des Hochregallagers (10) angeordnet sind.

7. Produktionsanlage nach einem der Ansprüche 2 bis 6,
**dadurch gekennzeichnet,**
**dass** das Hochregallager (10) zwei zueinander parallel angeordnete Lagerbereiche (11, 12) mit einem dazwischen angeordneten Zwischenbereich (13) für die Fördereinrichtung (15) aufweist.

## Claims

1. Production facility (100) for lithium-ion cells, having a plurality of production stations (20 to 22) for carrying out different process steps on the lithium-ion cells, wherein the production stations (20 to 22) are connected to one another by means of a conveying device (15) in order for the lithium-ion cells to be transported between the production stations (20 to 22),
**characterized**
**in that** the production stations (20 to 22) are arranged in the region of a storage system having accommodating locations (18) for the production stations (20 to 22), and in that, in order for lithium-ion cells to be transported directly between any two desired production stations (20 to 22), the conveying device (15) is designed in the form of a portal conveyor having a running rail (16) and a liftable and lowerable conveying mechanism (17).

2. Production facility according to Claim 1,
**characterized**
**in that** the storage system is designed in the form of a high-bay rack warehouse (10).

3. Production facility according to Claim 2,
**characterized**
**in that** at least one further accommodating location (19) is provided, preferably a plurality of further accommodating locations (19) are provided, wherein the at least one further accommodating location (19) is designed in the form of a storage location (23) without a production station (20 to 22), and in that the at least one storage location (23) is arranged above the production station (20 to 22).

4. Production facility according to Claim 3,
**characterized**
**in that**, in the case of a plurality of accommodating locations (19) designed in the form of a storage location (23) being present, said storage location is assigned to that production station (20 to 22) which, as the previously necessary or next necessary production station (20 to 22) for the lithium-ion cells, is at a minimal distance from the relevant accommodating location (23).

5. Production facility according to one of Claims 1 to 4,
**characterized**
**in that** the accommodating locations (18, 19) are of standard sizes.

6. Production facility according to one of Claims 2 to 5,
**characterized**
**in that**, as seen in relation to the vertical extent of the high-bay rack warehouse (10), the production stations (20 to 22) are arranged in a region of the high-bay rack warehouse (10) which is in the vicinity of the floor.

7. Production facility according to one of Claims 2 to 6,
**characterized**
**in that** the high-bay rack warehouse (10) has two storage regions (11, 12), which are arranged parallel to one another, with an intermediate region (13) for the conveying device (15), the intermediate region being arranged between the two storage regions.

## Revendications

1. Installation de production (100) pour des cellules lithium-ion, avec plusieurs stations de fabrication (20 à 22) pour l'exécution de différentes étapes de processus sur les cellules lithium-ion, dans laquelle les stations de fabrication (20 à 22) sont reliées l'une à l'autre au moyen d'un dispositif de transport (15) pour le transport des cellules lithium-ion entre les stations de fabrication (20 à 22), **caractérisée en ce que** les stations de fabrication (20 à 22) sont disposées dans la région d'un système de magasin avec des emplacements de réception (18) pour les stations de fabrication (20 à 22), et **en ce que** le dispositif de transport (15) est configuré pour le transport direct de cellules lithium-ion entre deux stations de fabrication quelconques (20 à 22) sous la forme d'un dispositif de transport à portique avec un rail de roulement (16) et un organe de transport montant et pivotant (17).

2. Installation de production selon la revendication 1, **caractérisée en ce que** le système de magasin est réalisé sous la forme d'un magasin à rayonnage en hauteur (10) .

3. Installation de production selon la revendication 2, **caractérisée en ce qu'**il est prévu au moins un autre emplacement de réception (19), de préférence plusieurs autres emplacements de réception (19), dans laquelle ledit au moins un autre emplacement de réception (19) est réalisé sous la forme d'un emplacement de magasin (23) sans station de fabrication (20 à 22), et **en ce que** ledit au moins un emplacement de magasin (23) est disposé au-dessus de la station de fabrication (20 à 22).

4. Installation de production selon la revendication 3, **caractérisée en ce qu'**en cas de présence de plusieurs emplacements de réception (19) réalisés sous la forme d'emplacements de magasin (23), celui-ci est associé à la station de fabrication (20 à 22), qui présente en tant que dernière ou plus proche station de fabrication nécessaire (20 à 22) pour les cellules lithium-ion une distance minimale de l'emplacement de réception concerné (23).

5. Installation de production selon l'une quelconque des revendications 1 à 4, **caractérisée en ce que** les emplacements de réception (18, 19) présentent des dimensions normalisées.

6. Installation de production selon l'une quelconque des revendications 2 à 5, **caractérisée en ce que** les stations de fabrication (20 à 22) sont disposées dans une région proche du sol du magasin à rayonnage en hauteur (10) par rapport à l'extension verticale du magasin à rayonnage en hauteur (10).

7. Installation de production selon l'une quelconque des revendications 2 à 6, **caractérisée en ce que** le magasin à rayonnage en hauteur (10) présente deux zones de magasin (11, 12) disposées parallèlement l'une à l'autre avec une zone intermédiaire (13) disposée entre celles-ci pour le dispositif de transport (15).
